# EUROPÄISCHE PATENTSCHRIFT

(11) **EP 2 251 280 B1**
(45) Veröffentlichungstag und Bekanntmachung des Hinweises auf die Patenterteilung: **10.08.2011**
(21) Anmeldenummer: 09006571.5
(22) Anmeldetag: 15.05.2009
(51) Int. Cl.: B65G 39/02, B65G 39/06, A23N 7/04, A23N 7/10

(54) **Vorrichtung zum Transport von langgestrecktem Schälgut**
Device for transporting elongated peeling goods
Dispositif de transport de légumes à éplucher allongés

(43) Veröffentlichungstag der Anmeldung: 17.11.2010
(73) Patentinhaber: Hepro GmbH, 33378 Rheda-Wiedenbrück (DE)
(72) Erfinder: Protte, Christoph, 33129 Delbrück (DE)
(74) Vertreter: Ostermann, Thomas

(56) Entgegenhaltungen:
- WO-A1-2004/030474
- DE-A1- 3 840 951
- DE-C1- 4 412 561
- DE-C1- 19 608 195
- US-A- 5 134 928

## Beschreibung

Die Erfindung betrifft eine Vorrichtung zum Transport von langgestrecktem Schälgut mit einer Anzahl von Transportwalzen, die jeweils eine sich quer zu einer Transportrichtung des Schälguts erstreckende Welle, welche um die Längsachse derselben drehbar gelagert ist, und einen quer zur Transportrichtung elastischen Walzenkörper aufweist, der die Welle radial zumindest abschnittsweise umgibt, wobei paarweise angeordnete Transportwalzen derart beabstandet zueinander angeordnet sind, dass das Schälgut unter Anlage an die Walzenkörper in Transportrichtung zwischen denselben förderbar gehalten ist.

Aus der DE 196 08 195 C1 ist eine Vorrichtung zum Schälen von langgestrecktem Schälgut, beispielsweise Spargel, Gurken, Karotten, Rettich, Schwarzwurzeln oder dergleichen, bekannt, bei der paarweise angeordnete Transportwalzen und Messerstationen wechselweise in Transportrichtung des langgestreckten Schälguts hintereinander angeordnet sind. Die Transportwalzenpaare dienen zum Fassen und Fördern des langgestreckten Schälguts entlang eines vorgegebenen Transportwegs. Die Messerstationen dienen zum Schälen des Schälguts. Um ein gleichmäßiges Schälen entlang der Umfangsfläche des Schälguts zu ermöglichen, sind die Transportwalzenpaare und die Messerstationen in Transportrichtung wechselweise angeordnet, wobei die Messerstationen um die Transportrichtung des Schälguts geschwenkt angeordnet sind.

Die Transportwalzenpaare weisen einen elastisch und im Wesentlichen zylinderförmigen Walzenkörper auf, der aus einem PU-Schaum gefertigt ist und drehfest mit einer Welle der Transportwalze verbunden ist. Die Welle der Transportwalze ist mit einer Antriebseinheit verbunden, so dass sie um ihre Längsachse drehbar angetrieben ist.

Um einen universellen Einsatz der Vorrichtung, insbesondere die Handhabung von Schälgut unterschiedlichen Durchmessers, zu gewährleisten, ist die Welle der Transportwalze drehbar um einen Schwenkarm gelagert, der seinerseits schwenkbar an einer feststehenden zweiten Achse gelagert ist. Die Verlängerung der Welle bzw. Achse ist jeweils mit Antriebsrädern verbunden, so dass durch Betätigung des Schwenkarms der Abstand von zwei Transportwalzen eines Transportwalzenpaares zueinander einstellbar ist. Nachteilig an der bekannten Vorrichtung ist zum einen, dass in Abhängigkeit von dem Durchmesser des langgestreckten Schälguts, der Abstand der Transportwalzen eines Transportwalzenpaares vorzugsweise manuell voreingestellt werden muss. Zum anderen neigt der aus PU-Schaum gefertigte offenporige Walzenkörper zur Aufnahme von Feuchtigkeit und Schmutz, so dass die Transportwalzen aus hygienischen Gründen häufig gewartet bzw. ausgetauscht werden müssen. Hiermit ist ein hoher Arbeitsaufwand und eine erhebliche Produktivitätseinbuße verbunden.

Aufgabe der vorliegenden Erfindung ist es, eine Vorrichtung zum Transport von langgestrecktem Schälgut derart weiterzubilden, dass die Universalität der Behandlung von langgestrecktem Schälgut unterschiedlichen Typs und unterschiedlicher Größe verbessert wird und darüber hinaus die Ausfall- und Wartungszeiten reduziert werden.

Zur Lösung dieser Aufgabe ist die Verbindung mit dem Oberbegriff des Patentanspruchs 1 dadurch gekennzeichnet, dass der Walzenkörper mindestens eine mit einem Fluid befüllbare Fluidkammer aufweist, die von einem Walzenmantel zumindest abschnittsweise umgeben ist.

Der besondere Vorteile der Erfindung besteht darin, dass ein Walzenkörper durch das Vorsehen einer mit einem Fluid befüllten Fluidkammer und eines die Fluidkammer zumindest teilweise umgebenden Walzenmantels eine in Radialrichtung elastische Transportwalze gebildet ist. Der Walzenmantel kann seinerseits aus einem nachgiebigen Material bestehen, so dass das Schälgut schonend und zugleich sicher zwischen den paarweise angeordneten Transportwalzen gehalten ist. Die Anpresskraft wird zum einen durch den Abstand der Transportwalzen zueinander und zum anderen durch die Elastizität des Walzenkörpers bestimmt. Durchmesserschwankungen, die das Schälgut in seiner Längsrichtung aufweist, können prinzipbedingt in besonders schonender Weise ausgeglichen werden. Die auf das Schälgut wirkende Anpresskraft bleibt hierbei im Wesentlichen konstant.

Nach einer bevorzugten Ausführungsform der Erfindung ist die Elastizität des Walzenkörpers über die in der Fluidkammer befindliche Fluidmenge einstellbar. Das Vorsehen einer einstellbaren Elastizität des Walzenkörpers über die in der Fluidkammer befindliche Fluidmenge gewährleistet eine gute und einfache Adaption des Walzenkörpes für unterschiedliche Typen und Geometrien von Schälgut. Beispielsweise kann die Elastizität beim Transport von besonders empfindlichem Schälgut, zum Beispiel Spargel, entsprechend erhöht werden. Demgegenüber kann bei robustem Schälgut, beispielsweise Karotten, die in der Fluidkammer befindliche Fluidmenge erhöht werden. Ebenso ist es möglich, über die Elastizität der Walzenkörper Einfluss auf die Anpresskraft zu nehmen. So kann über eine einstellbare Elastizität die Anpresskraft beispielsweise für Schälgut erhöht werden, das unmittelbar vor Eintritt in die Vorrichtung gewaschen wurde und daher eine feuchte, glitschige Oberfläche aufweist. Mechanische Eingriffe, beispielsweise eine Veränderung des Abstands der Transportwalzen, sind nicht erforderlich.

Nach einer Weiterbildung der Erfindung ist der Walzenmantel aus einem Elastomerwerkstoff und/oder einem Naturkautschuk und/oder einem faserverstärktem Werkstoff und/oder einem Verbundwerkstoff gebildet. Indem der Walzenmantel aus einem elastischen Werkstoff gefertigt ist, wird die Nachgiebigkeit des Walzenkörpers insgesamt erhöht und die Gefahr reduziert, dass das Schälgut beim Transport beschädigt wird. Darüber hinaus kann der weichelastische Walzenkörper sich besonders gut der unterschiedlichen Geometrie des Schälguts anpassen und eine optimale Anlage und einen optimalen Transport gewährleisten. Ein faserverstärkter Werkstoff bzw. ein Verbundwerkstoff können unter Beibehaltung der guten elastischen Eigenschaften eine hinreichende Formstabilität und Lebensdauer auch unter den von Feuchtigkeit und/oder Schmutz geprägten Randbedingungen des Schälprozesses gewährleisten.

Nach einer Weiterbildung der Erfindung weist der Walzenkörper eine geschlossene Außenseite auf. Durch eine geschlossene, das heißt auf makroskopische Poren verzichtende Außenhaut wird anders als bei den bisher eingesetzten PU-Schäumen erreicht, dass der Walzenkörper keine Feuchtigkeit aufnimmt. Ferner kann die geschlossene Außenhaut die Keimbildung verhindern bzw. signifikant reduzieren, da für das Festsetzen von Schmutz und Keimen in der Außenhaut entsprechende Oberflächenrauhigkeiten vorhanden sein müssen. Insgesamt verbessert sich durch die Verhinderung der Feuchtigkeitsaufnahme die Lebensdauer und Standzeit des Walzenkörpers. Darüber hinaus führt die Vermeidung bzw. deutliche Reduzierung der Keimbildung zu verlängerten Säuberungs- bzw. Wartungsintervallen. Die Vorrichtung kann daher wesentlich länger und wirtschaftlicher betrieben werden.

Nach einer Weiterbildung der Erfindung ist die Fluidkammer torusförmig ausgebildet. Sie umgibt die Welle wie ein Fahrradreifen die Felge. Infolge der torusförmigen Ausgestaltung der Fluidkammern ist eine über den Umfang gleichmäßige Elastizität des Walzenkörpers gewährleistet. Unabhängig von der Drehstellung der Transportwalzen ist damit die Elastizität sowie der Anpressdruck des Walzenkörpers an das Schälgut konstant. Das Schälgut wird besonders schonend gefördert.

Nach einer Weiterbildung der Erfindung ist ein ringförmiger Randabschnitt des Walzenmantels zwischen einer Anlageschulter der Welle und einem mit der Welle verbindbaren, verstellbar ausgeführten Festlegemittel kraft- und/oder formschlüssig festlegbar. Vorteilhaft kann die Fluidkammer in konstruktiv einfacher Weise abgedichtet und der Walzenmantel schnell und schonend montiert bzw. demontiert werden. Durch das verstellbare Festlegemittel kann die Dichtwirkung zum einen über den Fluiddruck bzw. die in der Fluidkammer befindliche Fluidmenge und zum anderen über die mit Hilfe des Festlegemittels aufgebracht Verspannkraft variiert werden.

Nach einer Weiterbildung der Erfindung ist die Welle zumindest zweiteilig ausgeführt. Sie weist einen hohlwellenförmigen Trägerkörper und einen mit dem Trägerkörper mittels Spritzgießen verbundenen Verbindungskörper auf. Durch das Vorsehen einer mindestens zweiteiligen Welle kann diese besonders einfach gefertigt werden. Der hohlwellenförmige Trägerkörper kann aus einem standardisierten Halbzeug in besonders günstiger Weise gefertigt werden. Der die Anlageschulter sowie weitere geometrische Funktionsbauteile aufweisende Verbindungskörper wird beispielsweise mittels Kunststoffspritzguss auf den Trägerkörper aufgespritzt. Hiermit ist eine toleranzarme Verbindung geschaffen, die auf zusätzliche Verbindungsmittel ebenso wie auf Klebstoffe oder dergleichen verzichtet.

Nach einer Weiterbildung der Erfindung ist der Transportwalze eine Steuereinheit und/oder eine Kompressionseinheit zugeordnet. Durch das Vorsehen einer Steuereinheit und/oder einer Kompressionseinheit kann der Druck des in der Fluidkammer befindlichen Fluids beispielsweise beim Transport des Schälguts variiert werden. Ferner ist eine Voreinstellung der Maschine für unterschiedliche Typen von Schälgut in besonders einfacher Weise möglich. Wird darüber hinaus der Druck des in der Fluidkammer befindlichen Fluids über ein geeignetes Messmittel erfasst, kann der Fluiddruck überwacht und/oder im Rahmen einer Regelung während des Transports an unterschiedliche Betriebszustände, beispielsweise Verschmutzungsgrade oder den aktuellen Durchmesser des Schälguts, angepasst werden.

Nach einer Weiterbildung der Erfindung wird Luft als Fluid eingesetzt. Die Verwendung von Luft ist zum einen aufgrund der Verfügbarkeit des Mediums sehr kostengünstig. Zum anderen ist die Verwendung von Luft in der Lebensmittelindustrie unkritisch. Sofern Luft während der Verarbeitung des Schälguts aus der Fluidkammer entweicht, ist die Qualität bzw. Sicherheit des Schälguts nicht beeinträchtigt.

Nach einer Weiterbildung der Erfindung ist der Walzenkörper zylindrisch ausgebildet oder weist einen sich im mittleren Bereich verringernden Durchmesser auf. Durch die Zylinderform bzw. den sich im mittleren Bereich verringernden Durchmesser wird ein Verrutschen bzw. Herausgleiten des Schälguts beim Transport in Transportrichtung quer zu derselben in Wellenlängsrichtung der Transportwalze vermieden. Sofern der Walzenkörper einen sich in dem mittleren Bereich verringernden Durchmesser aufweist, beispielsweise durch eine doppelte Kegelform, wird das Schälgut zwischen den Transportwalzen des Transportwalzenpaares selbstzentrierend gehalten.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
Figur 1 eine Seitenansicht eines Transportwalzenpaares und einer in Transportrichtung hinter dem Transportwalzenpaar angeordneten Schälstation,
Figur 2 eine Sicht auf das Transportwalzenpaar und die Schälstation gemäß Figur 1 in Transportrichtung,
Figur 3 eine Seitenansicht einer Transportwalze gemäß Figur 1,
Figur 4 einen Schnitt A-A durch die Transportwalze gemäß Figur 3 und
Figur 5 eine Ausschnittsvergrößerung des Ausschnitts X gemäß Figur 4.

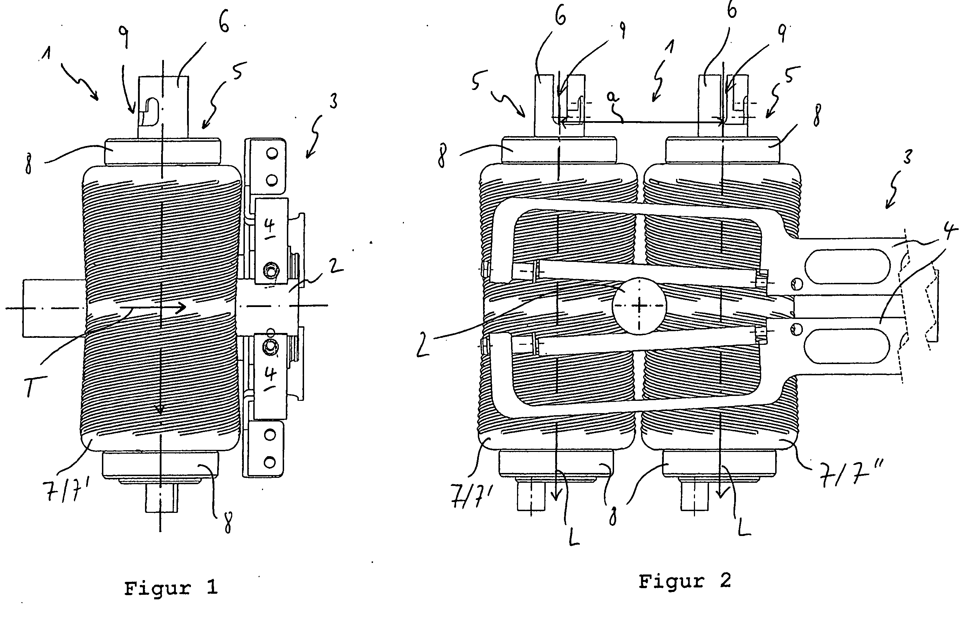

Eine Vorrichtung 1 zum Transport von langgestrecktem Schälgut 2 gemäß der Figuren 1 und 2 wird in Gemüseschälautomaten verwendet. In Transportrichtung T des langgestreckten Schälguts 2 (z. B. Spargel, Gurken, Karotten, Rettich, Schwarzwurzeln oder dergleichen) sind hierbei typischerweise eine Mehrzahl von Transportvorrichtungen 1 und Messerstationen 3 zum Schälen des langgestreckten Schälguts 2 wechselweise hintereinander angeordnet. Um das langgestreckte Schälgut 2 gleichmäßig und vollumfänglich zu schälen, sind die einzelnen Messerstationen 3 beispielsweise durch paarweise angeordnete Schälmesser 4 gebildet, die an die Mantelfläche des Schälguts 2 angelegt werden, und in Transportrichtung T winkelversetzt zueinander angeordnet. Die Transportvorrichtung 1 dient hierbei zum Erfassen und Führen des langgestreckten Schälguts 2 entlang des vorgegebenen Transportwegs. Ein Abstand zweier in Transportrichtung T hintereinander angeordneter Transportvorrichtungen 1 ist so gewählt, dass das langgestreckte Schälgut 2 beim Eintritt in die in Transportrichtung T gesehen vordere Transportvorrichtung 1 noch in der Transportrichtung T gesehen hinteren gehalten ist.

Die Transportvorrichtung 1 wird aus zwei paarweise angeordneten Transportwalzen 5 gebildet. Die Transportwalzen 5 bestehen im Wesentlichen aus einer Welle 6 und einem Walzenkörper 7, der über Festlegemittel 7 drehfest mit der Welle 6 verbunden ist. Der Walzenkörper 7 erstreckt sich hierbei in Wellenlängsrichtung L. Der Walzenkörper 7 ist koaxial zur Welle 6 angeordnet. Die Wellenlängsrichtung L ist senkrecht zur Transportrichtung T des langgestreckten Schälguts 2 orientiert.

Ein Abstand a der paarweise angeordneten Transportwalzen 5 ist so gewählt, dass das langgestreckte Schälgut 2 unter Anlage an den Walzenkörper 7 der Transportwalzen 5 in Transportrichtung T förderbar zwischen den Transportwalzen 5 gehalten ist. Der Abstand a ist hierbei lotrecht sowohl zu der Transportrichtung T als auch zur Wellenlängsrichtung L orientiert.

Zum Transport des langgestreckten Schälguts 2 werden wenigstens eine, typischerweise jedoch beide Wellen 6 der Transportwalzen 5 über eine nicht dargestellte Antriebseinheit um die Wellenlängsrichtung L rotatorisch angetrieben. Die rotatorische Antriebsbewegung wird von der Welle 6 auf den drehfest mit derselben verbundenen Walzenkörper 7 übertragen.

Der Walzenkörper 7 ist derart nachgiebig ausgebildet und/oder der Abstand a der paarweise angeordneten Transportwalzen 5 derart gewählt, dass die rotatorische Bewegung des Walzenkörpers 7 aufgrund einer zwischen demselben und dem langgestreckten Schälgut 2 wirkenden Anpresskraft in Transportrichtung T gefördert wird. Die Anpresskraft ist so gewählt, dass eine infolge der Anpresskraft zwischen dem langgestreckten Schälgut 2 und dem Walzenkörper 7 wirkende Reibkraft größer ist als eine in Transportrichtung T orientierte und der Bewegung in Transportrichtung T entgegenstehende Komponente einer in der Messerstation 3 wirkenden Schneidkraft.

Die Transportwalze 5 wird über einen Bajonettverschluss 9 drehfest und lösbar mit der nicht dargestellten Antriebseinheit verbunden. Sofern beide Transportwalzen 5 angetrieben sind, erfolgt der Antrieb der beiden Wellen 6 gegensinnig. Sofern lediglich eine Welle 6 angetrieben und die zweite Welle 6 lediglich passiv mitläuft, dreht sich die passiv mitlaufende Welle 6 aufgrund kinematischer Zwangsbedingungen ebenfalls gegensinnig zur angetriebenen Welle 6.

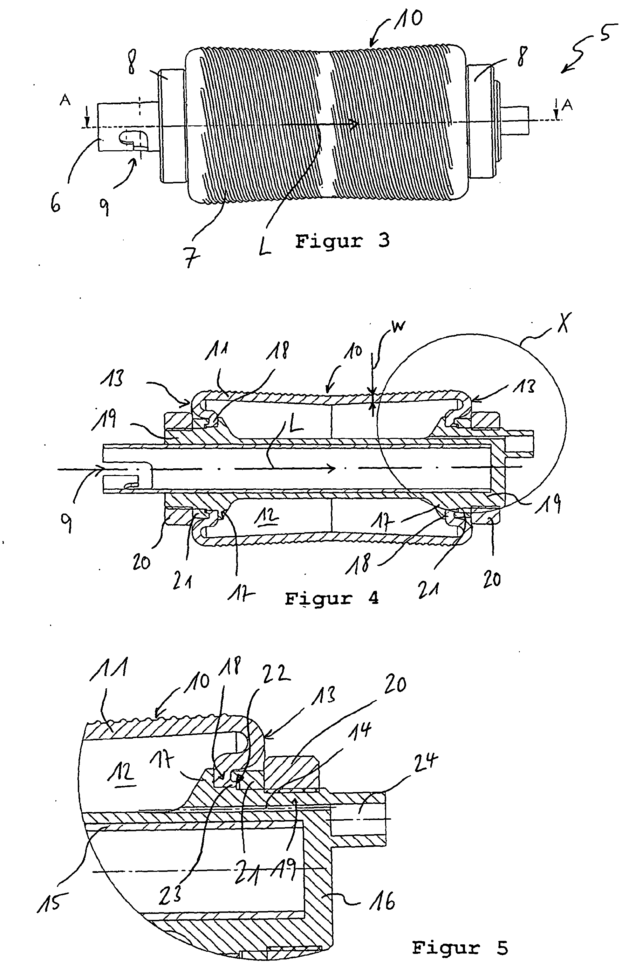

Figur 3 zeigt eine Seitenansicht einer einzelnen Transportwalze 5. Der Walzenkörper 7 weist einen in einem mittleren Bereich desselben verringerten Durchmesser und eine zumindest abschnittsweise wellenförmig profilierte Außenseite auf. Der profilierte Teil der Außenseite ist einem sich in die Wellenlängsrichtung L erstreckenden Laufflächenabschnitt 10 zugeordnet, an dem das langgestreckte Schälgut 2 beim Transport anliegt. Durch die Neigung der Außenseite im Bereich des Laufflächenabschnitts 10 und den in dem mittleren Bereich geringeren Durchmesser wird eine Zentrierung des langgestreckten Schälguts 2 beim Transport erreicht. Das langgestreckte Schälgut 2 nimmt hierdurch im Bezug zu der Transportwalze 5 eine definierte Position ein. Aufgrund dieser definierten Position kann das Schälgut 2 in der nachfolgende Messerstation 3 weitgehend frei von Querkräften, schonend und mit wenig Verschnitt geschält werden.

Alternativ ist es möglich, dass der Walzenkörper 7 eine andere als die dargestellte Außengeometrie aufweist. Er kann beispielsweise zylinderförmig ausgeführt sein oder konkav bzw. konvex gekrümmt sein.

Gegenüberliegende Walzenkörper 7, 7', 7" weisen vorzugsweise eine gegenläufige Profilierung auf, die - zumindest abschnittsweise - von einer ersten Stirnseite des Walzenkörpers 7, 7', 7" zu einer zweiten Stirnseite des Walzenkörpers 7, 7', 7" verläuft. Das Profil umschlingt den Walzenkörper 7, wobei es an dem einen Walzenkörper 7' rechssteigend und den anderen Walzenkörper 7" linkssteigend ausgeführt ist. Die Walzenkörper 7, 7', 7" sind schraubenförmig bzw. wendelförmig profiliert. Durch die Profilierung werden die Schälabfälle, zum Beispiel Gemüseschalen, Blattgrün oder Erdreich, vom Schälgut 2 in Richtung mindesteins einer Stirnseite der Transportwalzen 5 abgeführt. Hierdurch vereinfacht sich der Abtransport der Schälabfälle, und es setzt ein Reinigungseffekt ein, der das Umwickeln der Transportwalze 5 durch die Schalen reduziert bzw. gänzlich vermeidet.

Die Profilierung ist im mittleren Bereich des Walzenkörpers 7 unterbrochen, so dass sich insbesondere auf empfindlichem Schälgut 2, beispielsweise Spargel, keine Abdrücke bilden. Alternativ kann auf die Profilierung des walzenkörpers 7 verzichtet werden. Alternativ kann die Profilierung durchgängig zwischen den Stirnseiten des Walzenkörpers 7 ausgeführt sein.

Der Walzenkörper 7 ist gemäß Figur 4 aus einem Walzenmantel 11 und einer Fluidkammer 12 gebildet. Der Walzenmantel 11 bildet die Außenseite des Walzenkörpers 7 und umgibt die Fluidkammer 12 im Bereich des Laufflächenabschnitts 10 des Walzenkörpers 7 sowie abschnittsweise in axialer Richtung. Der Walzenmantel 11 weist einen im Wesentlichen U-förmigen Querschnitt auf, der durch den sich in die Wellenlängsrichtung L erstreckenden Laufflächenabschnitt 10 und zwei sich endseitig an den Laufflächenabschnitt 10 anschließende und denselben mit der Welle 6 verbindende Stirnseitenabschnitte 13 auf. Im Bereich der Stirnseitenabschnitte 13 ist der Walzenmantel 11 mäanderförmig ausgebildet.

Die Fluidkammer 12 wird zum einen durch den Walzenmantel 11 und zum anderen durch die Welle 6 begrenzt. Sie ist koaxial zur Welle 6 angeordnet. Die Fluidkammer 12 ist torus- bzw. ringförmig ausgebildet. Sie ist mit einem Fluid befüllbar, das über eine im Bereich der Welle 6 angeordnete Belüftungsbohrung 14 in die Fluidkammer 12 einbringbar ist. Die Elastizität des aus der Fluidkammer 12 und dem Walzenmantel 11 gebildeten Walzenkörpers 7 ist über die in der Fluidkammer 12 befindliche Fluidmenge einstellbar.

Um die Elastizität des Walzenkörpers 7 zu gewährleisten und gleichzeitig eine hinreichende Lebensdauer und Standzeit der Transportwalzen 5 zu erreichen, ist der Walzenmantel 11 zumindest teilweise aus einem Elastomerwerkstoff und/oder einem Naturkautschuk gefertigt. Ferner kann der Walzenmantel 11 aus einem faserverstärkten Werkstoff und/oder einem Verbundwerkstoff gebildet sein. Hierdurch lassen sich die positiven Eigenschaften unterschiedlicher Werkstoffe, zum Beispiel Elastizität und Zugfestigkeit bzw. Abriebfestigkeit, vorteilhaft kombinieren. Der Werkstoff ist hierbei so gewählt, dass der Walzenmantel 11 für das Fluid im Wesentlichen undurchlässig ist.

Der Werkstoff für den Walzenmantel 11 ist ferner so gewählt, dass die Außenseite zumindest makroskopisch geschlossen ausgebildet ist, das heißt keine Porosität aufweist. Durch das Vorsehen einer geschlossenen, keine größeren Poren aufweisenden Außenseiten wird das Festsetzen von Schmutz und damit die Keimbildung vermieden. Darüber hinaus kann die Feuchtigkeit nicht in die Poren der Außenhaut eindringen, so dass zum einen die Verschmutzungsneigung reduziert und zum andere die Standzeit der Walzenkörper 7 erhöht wird. Eine weitere Verbesserung der Standzeit ergibt sich, wenn der Walzenmantel 11 aus einem die Feuchtigkeit nicht aufnehmenden Material gebildet ist.

Der Walzenmantel 11 weist eine im Vergleich zu seiner Länge geringe Wandstärke w auf. Die Wandstärke w des Walzenmantels 11 kann hierbei in einem Bereich von 0,1 cm bis 5 cm gewählt sein. Typischerweise liegt die Wandstärke w des Walzenmantels 11 im Bereich von 0,3 cm bis 0,8 cm. Die Wandstärke w des Walzenmantels 11 muss nicht konstant sein und kann beispielsweise im Bereich des Laufflächenabschnitts 10 größer sein als im Bereich der Stirnseitenabschnitte 13.

Das Vorsehen eines die Feuchtigkeit nicht aufnehmenden Werkstoffs für den Walzenmantel 11 sowie die Profilierung des Walzenkörpers 7 sorgen zudem dafür, dass der Transport des langgestreckten Schälguts 2 durch den Gemüseschälautomaten auch unter den rauen Prozessrandbedingungen gewährleistet ist. Diese sind maßgeblich durch die aus dem zumindest teilweise geschälten Schälgut 2 austretenden Feuchtigkeit (z. B. Frucht- oder Gemüsesaft), den an dem Schälgut 2 anhaftenden Schmutz (z. B. Erde, Blattgrün) und durch das zur Reinigung des Schälguts 2 und der Schälmesser 4 eingesetzte Wasser definiert. Hierbei reduziert insbesondere die Feuchtigkeit die zwischen dem langgestreckten Schälgut 2 und dem Walzenkörper 7 wirkenden Reibkräfte. Dies kann - bei Verzicht auf eine mechanische Umrüstung der Maschine, beispielsweise durch den Einsatz anderer Transportwalzen 5 oder die Verringerung des Abstandes a derselben - durch eine Erhöhung des Fluiddrucks des in der Fluidkammer 12 befindlichen Fluids und die damit verbundene Erhöhung der Anpresskraft ausgeglichen werden.

Die Welle 6 ist in dem vorliegenden Ausführungsbeispiel zweiteilig ausgebildet. Sie wird aus einem hohlwellenförmigen Trägerkörper 15 und einem auf den Trägerkörper 15 aufgespritzten Verbindungskörper 16 gebildet. Der Trägerkörper 15 kann in wirtschaftlich vorteilhafter Weise aus einem Halbzeug gefertigt werden. An ihm ist auf einer der nicht dargestellten Antriebseinheit zugewandten Seite der Bajonettverschluss 9 vorgesehen.

Zur Festlegung des Walzenmantels 11 auf der Welle 6 weist der Verbindungskörper 16 zwei radial umlaufende Anlageschultern 17 auf. Ein ringförmiger Randabschnitt 18 der Stirnseitenabschnitte 13 des Walzenmantels 11 liegt an der Anlageschulter 17 der Welle 6 an und wird mittels einer über einen Gewindeabschnitt 19 mit der Welle 6 verbindbaren Mutter 20 sowie eine zwischen der Mutter 20 und dem ringförmigen Randabschnitt 18 angeordnete Distanzhülse 21 gegen die Anlageschulter 17 verspannt. Statt der Mutter 20 kann ein beliebiges anderes Festlegemittel, beispielsweise ein Spannring, zur Festlegung des Walzenmantels 11 eingesetzt werden.

Die Distanzhülse 21 weist gemäß Figur 5 eine umlaufende Aufnehmung 22 auf, in die eine Nase 23 des Walzenmantels 11 eingreift. Über die Nase 23 ist der Walzenmantel 11 zusätzlich zu der Verspannung zwischen Anlageschulter 17 und Distanzhülse 21 gegen ein radiales Lösen von der Welle 6 geschützt.

Die im Bereich des Verbindungskörpers 16 angeordnete Belüftungsbohrung 14 weist auf der der Fluidkammer 12 abgewandten Seite einen Aufweitungsbereich 24 auf. In den Aufweitungsbereich 24 kann ein nicht dargestellter Verschlussstutzen zum Abdichten der Fluidkammer 12 eingebracht werden. Alternativ kann in den Aufweitungsbereich 24 ein Ventil eingesetzt werden, über das die Fluidkammer 12 in einfacher Weise mit dem Fluid befüllt und/oder entleert werden kann. Alternativ können die Belüftungsbohrung 14 und/oder das Ventil und/oder der Verschlussstopfen im Bereich des Walzenmantels 11 angeordnet sein. Durch das Vorsehen eines Ventils wird die Möglichkeit geschaffen, die in der Fluidkammer 12 befindliche Fluidmenge und damit den Fluiddruck in einfacher Weise zu ändern. Durch die Änderung des Fluiddrucks ändert sich zum einen die auf das langgestreckte Schälgut 2 wirkende Anpresskraft. Zum andere kann sich der Durchmesser der Transportwalze 7 verändern. Hierbei wird sich die Transportwalze 7 vorzugsweise im Bereich der mäanderförmig ausgeformten Stirnseitenabschnitte 13 derart verformen, dass bei näherungsweiser Beibehaltung der Geometrie des Walzenkörpers 7 im Bereich des Laufflächenabschnitts 10 der Walzendurchmesser variiert, das heißt verkleinert und/oder vergrößert wird. Auf diese Weise kann sehr elegant und ohne mechanische Eingriffe an dem Gemüseschälautomaten die Transportvorrichtung 1 für den Transport unterschiedlichen Schälguts 2 umgerüstet werden, welches sich beispielsweise hinsichtlich seines Durchmessers und/oder seiner mechanischen Empfindlichkeit unterscheidet. Der Durchmesser und/oder die Flexibilität des Walzenkörpers 7 und/oder der Anpresskraft ist somit abhängig von dem Durchmesser des vorgegebenen Schälguts einstellbar.

Der Druck des in der Fluidkammer 12 befindlichen Fluids kann zur Bestimmung des Anpressdrucks über ein nicht dargestelltes Messmittel, beispielsweise einen im Bereich der Fluidkammer 12 angeordneten Drucksensor oder einen im Bereich der Belüftungsbohrung 14 angeordneten Volumenstromsensor, bestimmt werden. Beim Vorsehen eines Drucksensors kann unter Umständen eine seichende Abnahme des Innendrucks beispielsweise infolge der durch Diffusion des Fluids durch den ansonsten dicht ausgebildeten Walzenmantel 11 oder infolge einer Beschädigung des Walzenmantels 11 detektiert werden.

Nach einer weiteren alternativen Ausführungsform der Erfindung können der Transportvorrichtung 1 und/oder der Transportwalze 5 eine Steuereinheit und/oder eine Kompressionseinheit zugeordnet sein. In der Steuereinheit wird der für das jeweils zu schälende Schälgut 2 adäquate Fluiddruck ermittelt. Sofern die in der Fluidkammer 12 befindlichen Fluidmenge und/oder dem in der Fluidkammer 12 herrschenden Druck nicht optimal erscheint, kann über das Ventil Fluid ausströmen und/oder über die Kompressionseinheit zusätzliches Fluid in die Fluidkammer 12 eingebracht werden. Auf diese Weise kann die Transportvorrichtung 1 vollautomatisch und/oder ohne mechanische Eingriffe bzw. Umbauten allein durch Variation der Fluidmenge an unterschiedliche Typen und/oder Geometrien von Schälgut angepasst werden.

Als Fluid wird vorzugsweise Luft oder ein anderes, günstig verfügbares und im Bereich der Lebensmittelindustrie vorbehaltlos einsetzbares Fluid, zum Beispiel Wasser, zum Einsatz kommen.

Nach einer alternativen nicht dargestellten Ausführungsform der Erfindung kann zur Bildung der Fluidkammer 12 ein zwischen der Welle 6 und dem Walzenmantel 11 befindlicher Schlauch vorgesehen sein. Hierbei übernimmt der Schlauch die Dichtungsfunktion. Der Walzenmantel 11 kann hingegen die Geometrie des Walzenkörpers 7 sowie die geschlossene Außenseite und die Profilierung bilden. Er muss jedoch nicht aus einem für das Fluid zumindest weitgehend undurchlässigen Material gebildet sein und gegenüber der Welle 6 nicht abgedichtet werden. Der Schlauch wird - ähnlich wie bei einem Fahrradschlauch - über ein im Bereich der Welle 6 festgelegtes Ventil mit dem Fluid befüllt.

## Patentansprüche

1. Vorrichtung (1) zum Transport von langgestrecktem Schälgut (2) mit einer Anzahl von Transportwalzen (5), die jeweils
- eine sich quer zu einer Transportrichtung (T) des Schälguts (2) erstreckende Welle (6), welche um die Längsachse derselben drehbar gelagert ist, und
- einen quer zur Transportrichtung (T) elastischen Walzenkörper (7) aufweist, der die Welle (6) radial zumindest abschnittsweise umgibt,
wobei paarweise angeordnete Transportwalzen (5) derart beabstandet zueinander angeordnet sind, dass das Schälgut (2) unter Anlage an die Walzenkörper (7) in Transportrichtung (T) zwischen denselben förderbar gehalten ist, **dadurch gekennzeichnet, dass** der Walzenkörper (7) mindestens eine mit einem Fluid befüllbare Fluidkammer (12) aufweist, die von einem Walzenmantel (11) zumindest abschnittsweise umgeben ist.

2. Vorrichtung nach Anspruch 1, **dadurch gekennzeichnet, dass** die Elastizität des Walzenkörpers (7) über die in der Fluidkammer (12) befindliche Fluidmenge einstellbar ist.

3. Vorrichtung nach Anspruch 1 oder 2, **dadurch gekennzeichnet, dass** der Walzenmantel (11) aus einem Elastomerwerkstoff und/oder einem Naturkautschuk und/oder einem faserverstärkten Werkstoff und/oder einem Verbundwerkstoff gebildet ist.

4. Vorrichtung nach einem der Ansprüche 1 bis 3, **dadurch gekennzeichnet, dass** der Walzenkörper (7) eine geschlossene Außenseite aufweist.

5. Vorrichtung nach einem der Ansprüche 1 bis 4, **dadurch gekennzeichnet, dass** die Fluidkammer (12) torusförmig ausgebildet und/oder koaxial zur welle (6) angeordnet ist.

6. Vorrichtung nach einem der Ansprüche 1 bis 5, **dadurch gekennzeichnet, dass** das Fluid über eine Belüftungsbohrung (14) in die Fluidkammer (12) einbringbar ist.

7. Vorrichtung nach einem der Ansprüche 1 bis 6, **dadurch gekennzeichnet, dass** zur Abdichtung der Fluidkammer (12) ein ringförmiger Randabschnitt (18) des Walzenmantels (11) zwischen einer Anlageschulter (17) der Welle (6) und einem mit der Welle (6) verbindbaren, verstellbar ausgeführten Festlegemittel (Mutter 20) kraft- und/oder formschlüssig festgelegt ist.

8. Vorrichtung nach Anspruch 7, **dadurch gekennzeichnet, dass** als verstellbares Festlegemittel eine Mutter (20) angeordnet ist, die derart auf die Welle (6) aufschraubbar ist, dass der Walzenmantel (11) direkt über die Mutter (20) oder über eine zwischen der Mutter (20) und dem Randabschnitt (18) des Walzenmantels (11) angeordnete Distanzhülse (21) gegen die Anlageschulter (17) verspannbar ist.

9. Vorrichtung nach einem der Ansprüche 1 bis 8, **dadurch gekennzeichnet, dass** die Welle (6) zumindest zweiteilig ausgeführt ist mit einem hohlwellenförmigen Trägerkörper (15) und einem auf den Trägerkörper (15) aufgespritzten Verbindungskörper (16).

10. Vorrichtung nach einem der Ansprüche 1 bis 9, **dadurch gekennzeichnet, dass** der Fluidkammer (12) ein Messmittel zugeordnet ist zur Messung des Drucks des in der Fluidkammer (12) befindlichen Fluids.

11. Vorrichtung nach einem der Ansprüche 1 bis 10, **dadurch gekennzeichnet, dass** der Transportwalze (5) eine Steuereinheit und/oder eine Kompressionseinheit zugeordnet ist derart, dass der Druck des in der Fluidkammer (12) befindlichen Fluids einstellbar ist.

12. Vorrichtung nach einem der Ansprüche 1 bis 11, **dadurch gekennzeichnet, dass** der Walzenmantel (11) eine Dicke in einem Bereich von 0,1 cm bis 5 cm aufweist.

13. Vorrichtung nach einem der Ansprüche 1 bis 12, **dadurch gekennzeichnet, dass** Luft als Fluid einsetzbar ist.

14. Vorrichtung nach einem der Ansprüche 1 bis 13, **dadurch gekennzeichnet, dass** der Walzenmantel (11) im Wesentlichen einen U-förmigen Querschnitt aufweist mit einem sich in Wellenlängsrichtung (L) erstreckenden Laufflächenabschnitt (10) und zwei sich endseitig an den Laufflächenabschnitt (10) anschließenden und denselben mit der Welle (6) verbindenden Stirnseitenabschnitten (13).

15. Vorrichtung nach einem der Ansprüche 1 bis 14, **dadurch gekennzeichnet, dass** die Transportwalze (5) im Bereich des Walzenkörpers (7) zylindrisch ausgebildet ist und/oder einen sich in einem mittleren Bereich verringernden Durchmesser aufweist.

16. Vorrichtung nach einem der Ansprüche 1 bis 15, **dadurch gekennzeichnet, dass** der Laufflächenabschnitt (10) des Walzenmantels (11) profiliert ausgebildet ist.

17. Vorrichtung nach einem der Ansprüche 1 bis 16, **dadurch gekennzeichnet, dass** die Transportwalze (5) mittels eines Bajonettverschlusses (9) an einer Antriebseinheit abnehmbar gehalten ist, und dass die Welle (6) der Transportwalze (5) koaxial zu einer Antriebwelle der Antriebseinheit orientiert angeordnet ist.

18. Vorrichtung nach einem der Ansprüche 1 bis 17, **dadurch gekennzeichnet, dass** die paarweise angeordnete Walzenkörper (7) gegenläufig profiliert sind, wobei der eine Walzenkörper (7') rechtssteigend und der andere Walzenkörper (7") linkssteigend profiliert sind.

19. Vorrichtung nach einem der Ansprüche 1 bis 18, **dadurch gekennzeichnet, dass** der Walzenkörper (7) wendelförmig und/oder schraubenförmig profiliert ist.

20. Vorrichtung nach einem der Ansprüche 1 bis 19, **dadurch gekennzeichnet, dass** in einem mittleren Bereich des Laufflächenabschnitts (10) die Profilierung des Walzenkörpers (7) ausgespart ist zur Vermeidung von Abdrücken auf dem in dem mittleren Bereich an dem Laufflächenabschnitt (10) anliegenden langgestreckten Schälgut (2).

## Claims

1. Device (1) for transporting elongated peeling goods (2) comprising a number of transport rollers which each have a shaft (6) that extend cross to a transport direction (T) and are arranged to rotate around the longitudinal axis thereof, and a roller body (7) that is flexible cross to said transport direction (T) and that radially surrounds at least part of said shaft (6) wherein the transport rollers (5) arranged in pairs are relatively spaced apart in such a way that the peeling goods (2) contacting the roller bodies (7) are retained between said latter for advancement thereof in said transport direction (T), **characterized in that** the roller body (7) has at least one fluid chamber (12) filled with a fluid and is surrounded by a roller shell (11) in part at least.

2. Device according to Claim 1, **characterized in that** the flexibility of the roller body (7) is adjustable via the amount of fluid contained inside the fluid chamber (12).

3. Device according to Claim 1 or 2, **characterized in that** the roller shell (11) is made of an elastomer material and/or a natural rubber and/or a fiber-reinforced material and/or a composite material.

4. Device according to any of the preceding Claims 1 to 3, **characterized in that** the roller body (7) has a closed outer surface.

5. Device according to any of the preceding Claims 1 to 4, **characterized in that** the fluid chamber (12) is of toroidal shape and/or arranged coaxial with the shaft (6).

6. Device according to any of the preceding Claims 1 to 5, **characterized in that** fluid may be introduced into the fluid chamber (12) via a vent bore (14).

7. Device according to any of the preceding Claims 1 to 6, **characterized in that** to seal off the fluid chamber (12) there is an annular edge portion (18) of the roller shell (11) positively and/or non-positively engaged between a contact shoulder (17) of the shaft (6) and a fixing means (nut 20) which is adapted for adjustable connection to said shaft (6).

8. Device according to any of the preceding Claims 1 to 7, **characterized in that** a nut (20) is used as adjustable fixing means which can be screwed up on the shaft (6) in such a way that the roller shell (11) may be clamped against said contact shoulder (17) either via said nut (20) direct or via a spacer bush (21) disposed between said nut (20) and said annular edge portion (21).

9. Device according to any of the preceding Claims 1 to 8, **characterized in that** the shaft (6) is at least a two-part component consisting of a hollow shaft type supporting body member (15) and a connecting body member (15) spray-applied to said supporting body member (15).

10. Device according to any of the preceding Claims 1 to 9, **characterized in that** a measuring means is assigned to the fluid chamber (12) for measuring the pressure of the fluid contained inside the fluid chamber (12).

11. Device according to any of the preceding Claims 1 to 10, **characterized in that** a control unit and/or a compressor unit is assigned to the transport roller (5) such that the pressure of the fluid contained inside the fluid chamber (12) may be variable.

12. Device according to any of the preceding Claims 1 to 11, **characterized in that** the roller shell (11) has a thickness in the range between 0.1 cm and 5 cm.

13. Device according to any of the preceding Claims 1 to 12, **characterized in that** the fluid may be air.

14. Device according to any of the preceding Claims 1 to 13, **characterized in that** the roller shell (11) has a substantially U-shaped cross-section and consists of a working face section (10) extending in shaft axial direction (L) and two end face sections (13) adjacent to the ends of said working face section (10) which join said latter with the shaft (6).

15. Device according to any of the preceding Claims 1 to 14, **characterized in that** the transport roller (5) is of cylindrical shape in its body area (7) and/or has a diameter that reduces toward its center.

16. Device according to any of the preceding Claims 1 to 15, **characterized in that** the working face section (10) of the roller shell (11) is profiled.

17. Device according to any of the preceding Claims 1 to 16, **characterized in that** the transport roller (5) is detachably mounted to a drive unit by means of a bayonet catch (9) and that the shaft (6) of the transport roller (5) is coaxial with a drive shaft of said drive unit.

18. Device according to any of the preceding Claims 1 to 17, **characterized in that** the pairwise arranged roller bodies (7) are provided with profiles extending in opposite directions, namely the one roller body (7') with right-handed and the other roller body (7") with left-handed profiles.

19. Device according to any of the preceding Claims 1 to 18, **characterized in that** the profiles of each roller body (7) have the shape of a spiral and/or helix.

20. Device according to any of the preceding Claims 1 to 19, **characterized in that** in a central region of the working face section (10) the profile pattern of the roller body (7) is interrupted to avoid marks on the elongated peeling goods (2) contacting the central area of the working face section (10).

## Revendications

1. Dispositif de transport (1) d'un produit à éplucher allongé (2), avec une pluralité de galets de transport (5), qui présentent chacun
- un arbre (6), qui, s'étendant transversalement par rapport à la direction de transport (T) du produit à éplucher (2), est monté en rotation autour de l'axe longitudinal de celui-ci, et
- un corps de galet (7) élastique perpendiculairement à la direction de transport (T), qui entoure l'arbre (6) radialement, au moins par sections,
sachant que les galets de transport (5), disposés deux par deux, sont distancés les uns des autres de sorte que le produit à éplucher (2), portant contre les corps de galet (7), puisse être transporté dans la direction de transport (T), en étant maintenu entre eux, **caractérisé en ce que** le corps de galet (7) présente au moins une chambre de fluide (12), qui, pouvant être remplie avec un fluide, est entourée, au moins par sections, par une paroi latérale (11) du galet.

2. Dispositif selon la revendication 1, **caractérisé en ce que** l'élasticité du corps de galet (7) peut être réglée par la quantité de fluide, présente dans la chambre de fluide (12).

3. Dispositif selon revendication 1 ou 2, **caractérisé en ce que** la paroi latérale (11) du galet consiste en une matière élastomère et/ou en caoutchouc naturel et/ou en un matériau renforcé aux fibres et/ou en un matériau composite.

4. Dispositif selon l'une des revendications 1 à 3, **caractérisé en ce que** le corps de galet (7) présente une face extérieure fermée.

5. Dispositif selon l'une des revendications 1 à 4, **caractérisé en ce que** la chambre de fluide (12) est de conception torique et/ou est disposée coaxialement par rapport à l'arbre (6).

6. Dispositif selon l'une des revendications 1 à 5, **caractérisé en ce que** le fluide peut être amené dans la chambre de fluide (12) à travers un alésage d'aération (14).

7. Dispositif selon l'une des revendications 1 à 6, **caractérisé en ce que**, pour assurer l'étanchéité de la chambre de fluide (12), une zone marginale (18), annulaire de la paroi latérale (11) du galet est fixée par adhérence et/ou par emboîtement, entre un épaulement d'appui (17) de l'arbre (6) et un moyen de fixation (écrou) réglable, qui peut être relié à l'arbre (6).

8. Dispositif selon la revendication 7, **caractérisé en ce que**, comme moyen de fixation réglable, est prévu un écrou (20), qui peut être vissé sur l'arbre (6) de sorte que la paroi latérale (11) du galet soit serrée contre l'épaulement d'appui (17), directement au-dessus dudit écrou (20) ou au-dessus d'une douille d'écartement (21), qui est disposée entre l'écrou (20) et la zone marginale (18) de la paroi latérale (11) du galet.

9. Dispositif selon l'une des revendications 1 à 8, **caractérisé en ce que** l'arbre (6) est exécuté au moins en deux pièces, avec un corps de support (15) en forme d'arbre creux, et un corps de liaison (16), injecté sur ledit corps de support (15).

10. Dispositif selon l'une des revendications 1 à 9, **caractérisé en ce qu'**un moyen de mesure est associé à la chambre de fluide (12) pour mesurer la pression du fluide présent dans la chambre de fluide (12).

11. Dispositif selon l'une des revendications 1 à 10, **caractérisé en ce qu'**une unité de commande et/ou une unité de compression est/sont associée/s au galet de transport (5) de sorte que la pression du fluide, présent dans la chambre de fluide (12), puisse être réglée.

12. Dispositif selon l'une des revendications 1 à 11, **caractérisé en ce que** la paroi latérale (11) du galet présente une épaisseur, qui est située dans un domaine de 0,1 cm à 5 cm.

13. Dispositif selon l'une des revendications 1 à 12, **caractérisé en ce que** de l'air peut être utilisé comme fluide.

14. Dispositif selon l'une des revendications 1 à 13, **caractérisé en ce que** la paroi latérale (11) du galet présente une section transversale sensiblement en U, avec une zone de roulement (10), qui s'étend dans la direction longitudinale (L) de l'arbre, et deux zones frontales (13), qui se raccordent, à l'extrémité, à la zone de roulement (10) et relient celle-ci à l'arbre (6).

15. Dispositif selon l'une des revendications 1 à 14, **caractérisé en ce que** le galet de transport (5) est de forme cylindrique dans la région du corps de galet (7) et/ou présente un diamètre qui diminue dans la zone centrale.

16. Dispositif, selon l'une des revendications 1 à 15, **caractérisé en ce que** la zone de roulement (10) de la paroi latérale (11) du galet est profilée.

17. Dispositif selon l'une des revendications 1 à 16, **caractérisé en ce que** le galet de transport (5) est fixé, de manière amovible, à une unité d'entraînement, au moyen d'une fermeture à baïonnette (9), et que l'arbre (6) dudit galet de transport (5) est orienté coaxialement par rapport à un arbre de commande de l'unité d'entraînement.

18. Dispositif selon l'une des revendications 1 à 17, **caractérisé en ce que** les corps de galet (7), disposés en paires, sont profilés en sens contraire, sachant que l'un (7') des corps de galet est profilé vers la droite et que l'autre corps de galet (7") est profilé vers la gauche.

19. Dispositif selon l'une des revendications 1 à 18, **caractérisé en ce que** le corps de galet (7) présente un profil en forme de colimaçon et/ou en forme de filet de vis.

20. Dispositif selon l'une des revendications 1 à 19, **caractérisé en ce que**, dans une région centrale de la zone de roulement (10), le profil du corps de galet (7) est dégagé pour éviter la formation d'empreintes sur le produit à éplucher (2) allongé portant contre la zone de roulement (10), dans la région centrale.
